# EUROPEAN PATENT SPECIFICATION

(11) **EP 4 561 418 B1**
(45) Date of publication and mention of the grant of the patent: **10.12.2025**
(21) Application number: 23758381.0
(22) Date of filing: 27.07.2023
(51) Int. Cl.: A47J 42/40

(54) **GRINDER FOR GRINDING A PRODUCT IN BEANS, PARTICULARLY FOR A BEVERAGE VENDING MACHINE**
MAHLWERK ZUM MAHLEN EINES BOHNENPRODUKTES, INSBESONDERE FÜR EINEN GETRÄNKEVERKAUFSAUTOMAT
BROYEUR POUR BROYAGE D'UN PRODUIT EN GRAINS, EN PARTICULIER POUR UN DISTRIBUTEUR AUTOMATIQUE DE BOISSONS

(30) Priority: 29.07.2022 IT 202200016245
(43) Date of publication of application: 04.06.2025
(73) Proprietor: EVOCA S.p.A., 24030 Valbrembo (BG) (IT)
(72) Inventor: BALDO, Massimo, 31057 Silea (TV) (IT)
(74) Representative: Studio Torta S.p.A.
(86) International application number: PCT/IB2023/057628
(87) International publication number: WO 2024/023755

(56) References cited:
- IT-A1- VR20 090 128
- US-A- 4 238 058
- US-A1- 2013 091 802
- US-B2- 10 512 364
- US-B2- 9 198 535

## Description

### Cross-Reference to Related Applications

This Patent Application claims priority from Italian Patent Application No. 102022000016245 filed on July 29, 2022.

### Technical Field of the Invention

This invention relates to a grinder for grinding a product in beans, particularly for a beverage vending machine.

### Prior Art

In the field of machines for preparing beverages, in general, and coffee in particular, to which the following description will refer without losing generality, it is known to use a grinding and dosing apparatus comprising a grinder, which receives a flow of coffee beans, and dispenses a flow of ground coffee with a predefined grain size that can be chosen according to the type of beverage to be prepared.

In some applications, in particular in the world of vending, the grinding and dosing apparatus further comprises a volumetric doser, which receives the flow of ground coffee from the grinder and doses it before sending it to a beverage preparation unit, such as, for example, a brewing assembly.

Generally, the doser comprises a dosing chamber, which has a constant and predefined volume depending on the quantity of ground coffee required for the preparation of a beverage and is progressively filled until it is completely full, after which it is emptied by opening a discharge opening, through which the ground coffee is discharged into the beverage preparation unit.

Although commonly used, the known volumetric dosers of the type described above are not completely satisfactory since they do not ensure precise dosing and, above all, consistent dosing over time. This imprecision derives from the fact that the dosing fails to take account of the changes in the coarseness of the ground coffee as a result of the inevitable wear of the grinder and requires, therefore, periodic calibration by a specialised technician in order to limit the change in the dose of ground coffee dispensed by the doser.

Another cause of imprecision derives from the fact that, inevitably, a part of the ground coffee progressively thickens near or around the inlet and discharge openings of the dosing chamber, hindering the normal flow and the expected movement of the mobile walls for the opening/closing of the inlet and discharge openings. The presence of agglomerates of ground coffee inside the chamber - the more powdery the ground coffee is and the more sensitive it is to humidity, the more agglomerates there are - risks misrepresenting the amount of ground coffee dispensed by the dosing chamber both as less than, if part of the ground coffee cannot leave the dosing chamber, and as more than, if, together with the amount of ground coffee in the dosing chamber, an additional amount of ground coffee not dispensed in the previous dosings, which remained thickened around the chamber openings, is dispensed.

In addition to this, the volumetric dosers are normally not very flexible, *i.e.,* they are not suitable for being quickly adapted to dispense partial doses or, in any case, different from a multiple of the amount that can be co0ntained in the dosing chamber.

In other applications, typically in the sector of home coffee machines or in the hospitality industry, volumetric dosers are not used and the ground product is dosed based on the operation time of the grinder or on the number of revolutions of the grinder rotor. In these cases, then, the amount of ground coffee for the preparation of a beverage to be dispensed is determined indirectly, *i.e.,* it is estimated based on an operation time of the grinder or a number of expected revolutions of the grinder rotor.

This method, though it enables simple, continuous, and practically immediate changes to the quantity of ground coffee required for beverages, even different ones, is critical in some situations, not at all infrequent, including that involving an inconstant flow of coffee beans delivered to the grinder or even the total lack of coffee beans in the supply hopper of the grinder.

In these cases, the expected amount of ground coffee is, theoretically, dispensed while, in practice, it is partial or even zero.

To avoid this issue, the counting of the number of revolutions of the grinder drive motor is combined with checking the current absorbed by the same. If, on the one hand, this association makes it possible to detect discontinuity or absence of coffee beans supplied to the grinder, which is signalled by an oscillation or rapid reduction in the current absorbed by the grinder motor, on the other hand, it does not enable improvements in the precision of the dosing of the ground coffee since a change in the current absorbed by the grinder motor is in any case detected later than when the discontinuity actually occurs, so that at least part of the dosings are carried out with less ground coffee.

Association of two measuring devices for measuring the current absorption and the number of revolutions of the grinder motor also has the drawback of increasing, on the one hand, the production costs of the grinding and dosing apparatus and requires, on the other hand, frequent and periodic maintenance and control operations to ensure the expected efficiency of the two measuring devices and the synergy between the same.

US 10 512 364 B2 discloses a grinder for preparing powdered brewing materials comprising a main casing, a grinding assembly and an unloading assembly to measure the amount of the brewing powder to unload. The unloading assembly has an unloading motor and a measuring barrel. When the user puts the brewing materials into the main casing, the grinding assembly grinds the brewing materials into the brewing powder. The brewing powder drops into the unloading assembly. When the unloading motor actuates the measuring barrel rotates, the brewing powder is deposited in a filter. Therefore, a user can grind tea leaves, Chinese herbal medicine, the petals and so on to have fresh brewing powder. Brewing liquids with the fresh brewing powder keeps the nutrient content and flavour. In addition, the bags for packaging the brewing powder is no longer needed to reduce environmental pollution and packaging cost.

US 2013/091802 A1 discloses a coffee filter pouch maker comprising a bean hopper that gravity feeds into an electric bean grinder that ejects grounds into a hopper. A precise manual portioner delivers by gravity feed a predetermined amount of grounds into a filter pouch. Filter pouched are provided on a perforated roll of filter pouches. The filter pouches are sealable. A roll of impermeable bag segments is provided to hold one or more prepared filter pouches. The impermeable bags are vacuumed and sealed with an integrated vac/seal assembly.

### Subject and Summary of the Invention

The purpose of the present invention is to provide a grinder for grinding a product in beans, which makes it possible to overcome the above-described drawbacks.

According to this invention, a grinder for grinding a product in beans, particularly for a beverage vending machine, is provided, as claimed in the appended claims.

### Brief Description of the Drawings

The invention will now be described with reference to the attached drawings that illustrate a non-limiting embodiment thereof, in which:
Figure 1 schematically illustrates, in a perspective view and lateral elevation, a grinder according to the present invention in a coffee beverage preparation machine schematically and partially illustrated;
Figure 2 is a cross-section of the grinder shown in Figure 1; and
Figure 3 illustrates, in a perspective view and on a greatly enlarged scale, a detail of Figure 1.

### Detailed Description of Preferred Embodiments of the Invention

This invention will now be described in detail with reference to the figures attached to enable a person skilled in the art to produce it and use it. Various modifications to the described embodiments will be readily apparent to those skilled in the art and the general principles described may be applied to other embodiments and applications without however departing from the protective scope of this invention as defined in the appended claims. Therefore, this invention should not be regarded as limited to the embodiments described and illustrated herein, but should be allowed the broadest protection scope consistent with the features described and claimed herein.

Unless otherwise defined, all technical and scientific terms used herein have the same meaning commonly understood by one of ordinary skill in the art to which the invention belongs. In case of conflict, the present specification, including the definitions provided, will control. In addition, the examples are provided purely for illustrative purposes and, as such, must not be considered as limiting.

In order to facilitate understanding of the embodiments described herein, reference will be made to some specific embodiments and a specific language will be used to describe the same. The terminology used herein is used for the purpose of describing particular embodiments only, and is not intended to limit the scope of the present invention.

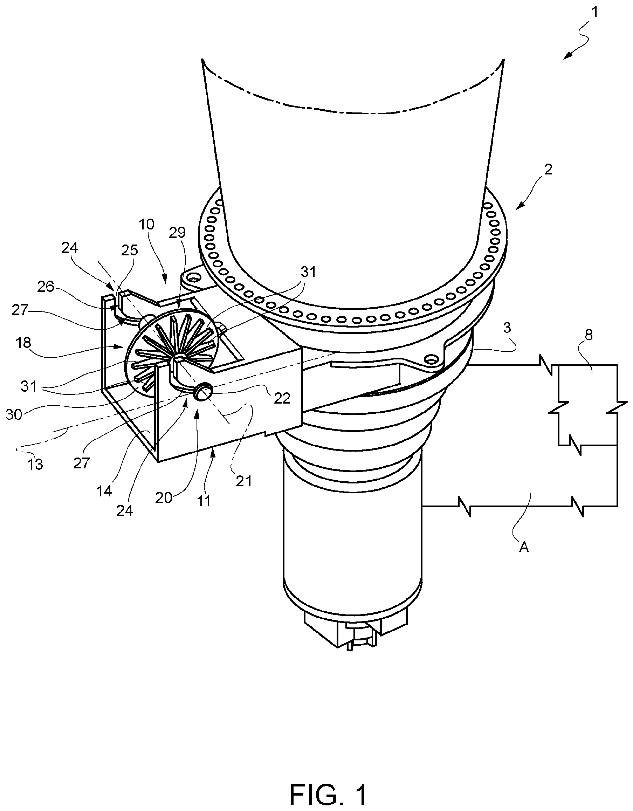

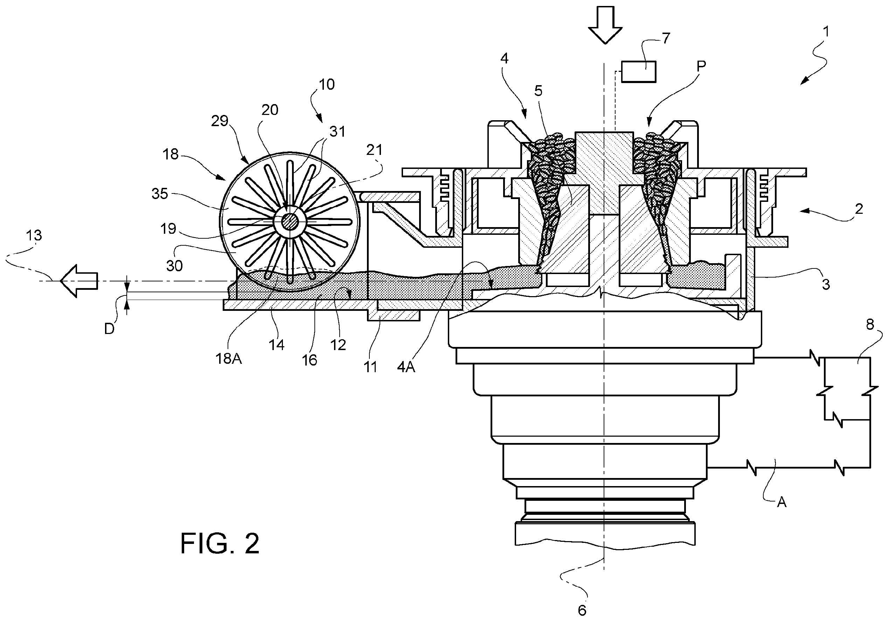

In Figures 1 and 2, reference numeral **1** references, as a whole, a grinding apparatus for grinding a product **P** in beans (Figure 2), for example coffee, which apparatus is preferably, but not exclusively, applicable in a coffee beverage preparation machine **A** that is known per se and partially illustrated.

The grinding apparatus **1** comprises a grinder **2** known per se and comprising an attachment frame **3,** an inlet **4** for the product **P** to be ground, an outlet **4A** for the ground product **P,** and a movable grinding member **5** for grinding the product **P** in beans.

The movable grinding member **5** is mounted to rotate about a fixed axis **6** under the thrust of an electric motor **7** controlled by an electronic control unit **8** of the coffee beverage preparation machine **A.**

The grinding apparatus **1** further comprises a measuring device **10** for measuring the amount of ground product flowing through the outlet **4A** and enabling the dosing of the ground product in predefined portions to obtain corresponding coffee beverages.

With reference to Figure 2, the measuring device **10** comprises a frame **11,** which is coupled and permanently connected to the frame **3** at the outlet **4A** and delimits a channel **12** extending in a direction **13** orthogonal to the fixed axis **6.**

The channel **12** has a rectangular cross-section and comprises a bottom wall **14** that is transverse to the axis **6** and two side walls **15** that face each other and project upwards from the bottom wall **14.** The bottom wall **14** can be perpendicular to the axis **6** or inclined to encourage the discharge of the ground product.

The channel **12** has an inlet that communicates with the outlet **4A** to receive the ground product from the grinder **2** and is configured to form and move a continuous flow **16** of ground product in a supply or evacuation direction coinciding with the direction **13** and directly towards a known beverage production unit not shown in the Figures.

With reference to Figure 2, the measuring device **10** further comprises a measuring wheel **18** arranged inside the channel **12** to cooperate with the flow **16** of ground product.

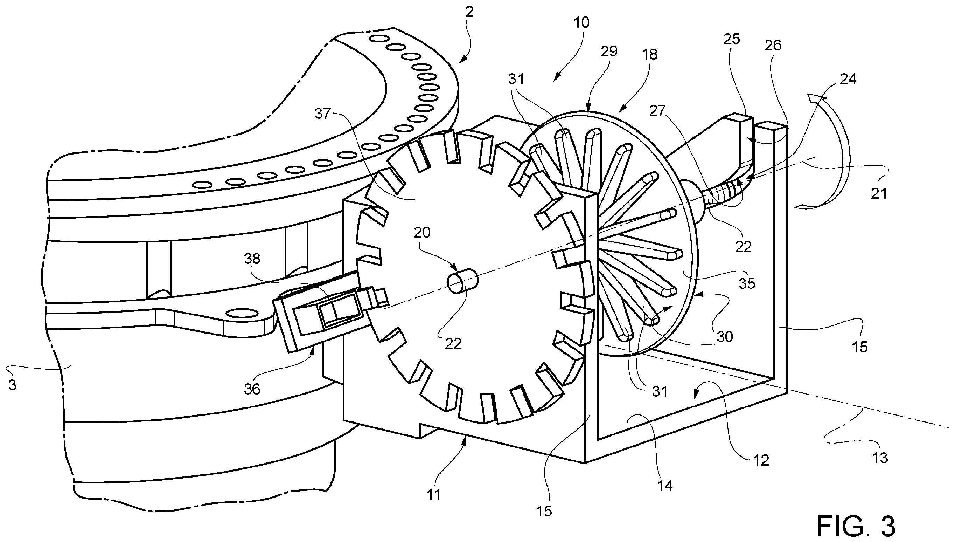

With reference to Figure 2 and, in particular, to Figure 3, the wheel **18** is keyed to an intermediate portion **19** of a hinge shaft **20,** which has an axis **21,** which is orthogonal to the direction **13** and to the axis **6** and parallel to the bottom wall **14,** and two opposite end portions **22.** The wheel **18** is delimited on the outside by a circular perimeter surface **29** and is mounted, in relation to the channel **12,** so that said perimeter surface **29** is arranged at a minimum distance **D** from the bottom wall **14.**

In the example shown in Figure 1, each portion **22** extends through a corresponding wall **15** and rotatably and slidably engages an associated shaped guiding slit **24** formed through the corresponding side wall **15.**

In the example described, each slit **24** has an opening **25** open upwards for the access and insertion of the corresponding portion **22** and, starting from the corresponding opening **25,** a section **26** that is basically vertical and orthogonal to the bottom wall **14,** and a section **27** inclined with respect to the supply direction **13** and, preferably, curved, which has a concavity turned upwards and ending, below, with a stop or end-of-stroke surface, against which the corresponding portion **22** rests.

The configuration of the slits **24** is chosen so as to enable a free and continuous movement of the shaft **20** along a predefined distancing path that allows the wheel **18** to move away from the bottom wall **14** so that the wheel **18** can be arranged in multiple operating positions under the thrust of the ground product alone.

In a different embodiment, the portions **22** of the wheel **18** are assembled on corresponding side walls **15** in an axially fixed position so that the distance of the perimeter surface **29** from the bottom wall **14** is always constant.

With reference to the attached Figures, the wheel **18** is delimited by two opposite front surfaces **30** that are orthogonal to the axis **21;** each front surface **30** carries a set of radial ribs, referenced with **31,** which cantilevers parallel to the axis **21** from the corresponding front surface **30.**

In the example shown, the ribs **31** are equal in size and configuration and each of them has a dimension measured parallel to the axis **21** that increases from the periphery to the axis **21.** Each rib **31** preferably ends towards the perimeter surface **29** with an end section, which is radially withdrawn from the perimeter surface **29** so as to leave free an external annular portion **35** of the corresponding front surface **30** from ribs, as can be seen in Figures 2 and 3.

In a different embodiment, the ribs **31** may have different sizes and configurations.

With reference to Figure 3, the measuring device **10** comprises, finally, an electronic sensory system **36** designed to sense the angular portion of the wheel **18** around the axis **21** and output an electric signal that enables the electronic control unit **8** to compute the angular movement of the wheel **18** around the axis **21** and, based on the computed angular movement, the amount of ground product flowing along the channel **12** towards the outlet **4A.** The electronic control unit **8** is preferably programmed to control the operation of the electric motor **7** of the grinder **2** based on the computed amount of product.

Conveniently, the electronic sensory system **36** comprises a phonic wheel **37** keyed to one of the end portions **22** of the shaft **20** and a sensor **38** associated with the phonic wheel **37** and connected to the electronic control unit **8** of the coffee beverage preparation machine **A.**

The phonic wheel **37** can be of any known type that fits for the purpose, for example, a magnetic-inductive one or an optical (encoder) one or a capacitive one. The sensor **38,** which may be of the electromagnetic or Hall effect type or a return optical sensor depending on the type of phonic wheel used, is arranged facing a toothed edge of the wheel **18** to detect the passage of the teeth of the wheel **18** and output an impulse electrical signal with a frequency indicative of the rotation speed of the phonic wheel **37.**

In use, the ground product flowing out of the grinder **2** through the outlet **4A** enters and moves forward in the channel **12** forming the flow **16** of ground product, which, irrespective of the beverage to be prepared and, thus, of the quantity of ground product required, has an almost constant cross-section and a thickness that is always greater than the minimum distance **D.** In this way, as can be seen in Figure 2, a perimeter portion **18A** of the wheel **18** is always inserted in the flow **16** of ground product that, therefore, rotates the wheel **18** around the axis **21.**

The dragging of the wheel **18** is ensured by the ribs **31,** whose peripheral end segments penetrate inside the same flow **16** and are intercepted by the flow **16** of ground product coming out. The impact between the flow **16** of ground product and the ribs **31** advantageously produces, in addition, the breaking or breakdown of any lumps or agglomerates of ground product present around the wheel **18.**

The rotation speed of the wheel **18** is measured by the electronic sensory system **36** and a corresponding signal is transmitted to the electronic unit **8,** which, being known the quantity of ground product required to produce the requested beverage and the ratio between the quantity of ground product that is fed to the outlet of the channel **12** per impulse of the signal outputted by the sensor **38,** stops the electric motor **7** as soon as the amount of ground product required to produce the requested beverage has flown through the outlet of the channel **12.**

It seems, instead, clear that no signal is emitted when the flow of ground product is below a minimum threshold or is absent. In this case, the wheel **18** while being arranged in its lower, end-stroke position no longer comes into contact with the ground product and the consequent lack of rotation in the wheel **8** is sensed by the unit **8** that immediately generates a beverage dispensing stop signal.

The presence and shape of the slits **24** enable, instead, the wheel **18** to freely raise from the bottom wall **14** when the thickness of the flow **16** of the ground product changes, so as to avoid the formation of a barrier that would block the supply of the ground product, but without the conditions for engaging the wheel **18** with the ground product being changed. In any case, the shape of the slits **24** must be such that the movement of the wheel **18** with respect to the bottom wall **14** remains within the limits that make it possible to maintain accurate control of the amount of ground product that flows in the channel **12** and, in addition, that ensures the continuity of the connection between the sensor **38** and the phonic wheel **37.**

From the above, it is clear that the device **10** allows, on the one hand, the extremely precise measurement of the quantity of ground product transiting in the channel **12** and, thus, the precise dosing of the ground product producing beverages that have all the same characteristics.

On the other hand, the device **10** enables the arbitrary change in very little time of the quantity of ground product expected to produce different beverages without the need to make configuration or structural changes.

From the above, then, it also seems clear that the particular production features of the channel **16,** wheel **18,** and coupling of the same wheel **18** avoid any jamming of the ground product moved forward as well as the formation of agglomerates that are mainly responsible for generating errors, dosing problems, and consequent changes in the quality of the beverage dispensed.

The inclusion of slits **24** that are open upwards eases and minimises the time for the normal cleaning and control operations.

From the above, it also seems clear that the assembly **1** described can be modified, or variants thereof produced, without departing from the protective scope defined by the claims.

In particular, the wheel **18** could be made differently from that described, by way of example, or coupled to the channel differently to how indicated, but always with the goal of ensuring the maximum fluidity and uniformity of the ground product's forward movement. For example, instead of a single wheel, two wheels arranged in parallel could be used.

In addition, the wheel **18** could be coupled to the walls **30** in a different way to that indicated, again to be moved from and towards the bottom wall **14** in a continuous way, or in a discrete way between the above-mentioned lower, end-stop position or minimum distance from the bottom wall **14** and at least one raised position in which it is placed at a distance from the bottom wall **14** that is greater than the above-mentioned minimum distance.

The grinding apparatus **1** described has, in addition, the additional advantage of being easily applied to the grinding apparatus already provided with conventional dosing systems as well, in particular those based on the numerical control of rotations of the grinder motor, in order to obtain better dosing precision.

Additional advantages consist in the construction simplicity and, thus, reduction in production costs, in the ease of cleaning thanks to less clogging of powder in the components, and in the ease of dosing auto-adjustment based on the coffee previously dispensed calculating the data of the pump, volumetric doser, and mechanism effort of the brewing assembly. For example, if the coffee is dispensed in a time of 10 sec and a flow of 4 grams per second, the software can adapt by calibrating the following coffee by adding or decreasing the quantity of ground product to be dispensed to change the parameters previously obtained.

## Claims

1. A grinding apparatus (1) for grinding a product in beans, in particular for a beverage vending machine (A);
the grinding apparatus (1) comprises a grinder (2) with an attachment frame (3), an inlet (4) for a product in beans to be ground, a movable grinding member (5) for grinding the product in beans; an electric driving motor (7) for driving the movable grinding member (5); an outlet (4A) for a ground product; and dosing means for dosing an amount of ground product supplied by the grinding apparatus (1);
the dosing means comprising a measuring device (10) comprising a guide channel (11) communicating with said outlet (4A) and configured to form and advance a uniform flow (16) of ground product in a supply direction (13), and at least one wheel (18) partially housed in said guide channel (11) and coupled to said attachment frame (3) to rotate about an hinge axis (21) transverse to said supply direction (13);
the measuring device (10) further comprises an electronic sensory system (36) for sensing, and outputting an output signal indicative of, an angular position of the wheel (18) about said hinge axis (21) during the flow (16) of the ground product so as to allow an electronic control unit (8) to compute the amount of ground product flowing through said outlet (4A) based on said output signal;
**characterized in that** the wheel (18) is coupled to said attachment frame (3) to freely rotate about said hinge axis (21) under the thrust of said ground product flow (16).

2. The grinding apparatus (1) of claim 1, wherein the electric driving motor (7) for driving the movable grinding member (5) is controlled by the electronic control unit (8) based on the output signal outputted by the electronic sensory system (36).

3. The grinding apparatus (1) of claim 1 or 2, wherein the electronic sensory system (36) comprises a phonic wheel (37) keyed to a shaft (20) of the wheel (18), and a sensor (38) associated to the phonic wheel (37) and connected to the electronic control unit (8).

4. The grinding apparatus (1) of any one of the preceding claims, wherein said guide channel (11) has a bottom wall (14) and wherein said wheel (18) is delimited externally by a perimeter surface (29) coaxial to the hinge axis (21) and spaced from said bottom wall (14).

5. The grinding apparatus (1) of claim 4, wherein said wheel (18) carries a plurality of radial ribs (31) extending radially starting from said hinge axis (21).

6. The grinding apparatus (1) of claim 5, wherein said wheel (18) has two opposite front surfaces (30) orthogonal to said hinge axis (21); each of said front surfaces (30) carrying a relative group of said radial ribs (31) axially cantilevering from the respective front surfaces (30).

7. The grinding apparatus (1) of claim 5 or 6, wherein each of said radial ribs (31) has a size, measured parallel to said hinge axis (21), which increases towards said hinge axis (21).

8. The grinding apparatus (1) of any one of claims 4 to 7, wherein said hinge axis (21) is movable with respect to said bottom wall (14) between a lowered, end of stroke position, in which the wheel (18) is arranged at a minimum distance (D) from said bottom wall (14), and at least one raised position in which the wheel (18) is arranged at a distance from said bottom wall (14) greater than said minimum distance (D).

9. The grinding apparatus (1) of claim 8, further comprising guide means (26) to continuously guide said hinge axis (21) along a distancing path that allows said wheel (18) to move away from said bottom wall (14).

10. The grinding apparatus (1) of claim 9, wherein said distancing path comprises at least one inclined section (27) relative to said supply direction (13).

## Patentansprüche

1. Mahlgerät (1) zum Mahlen eines Produkts in Bohnen, insbesondere für einen Getränkeautomaten (A);
das Mahlgerät (1) umfasst ein Mahlwerk (2) mit einem Befestigungsrahmen (3), einem Einlass (4) für ein zu mahlendes Produkt in Bohnen, einem beweglichen Mahlglied (5) zum Mahlen des Produkts in Bohnen; einen elektrischen Antriebsmotor (7) zum Antreiben des beweglichen Mahlglieds (5); einen Auslass (4A) für ein gemahlenes Produkt; und Dosiermittel zum Dosieren einer Menge an gemahlenem Produkt, die von dem Mahlgerät (1) zugeführt wird;
wobei die Dosiermittel eine Messvorrichtung (10) umfassen, die einen Führungskanal (11), der mit dem Auslass (4A) kommuniziert und konfiguriert ist, um eine gleichmäßige Strömung (16) von gemahlenem Produkt in einer Zuführrichtung (13) zu bilden und voranzutreiben, und mindestens ein Rad (18) umfasst, das teilweise in dem Führungskanal (11) untergebracht und mit dem Befestigungsrahmen (3) gekoppelt ist, um sich um eine Gelenkachse (21) quer zu der Zuführrichtung (13) zu drehen;
die Messvorrichtung (10) umfasst ferner ein elektronisches Sensorsystem (36) zum Erfassen und Ausgeben eines Ausgangssignals, das eine Winkelposition des Rads (18) um die Gelenkachse (21) während der Strömung (16) des gemahlenen Produkts anzeigt, um es einer elektronischen Steuereinheit (8) zu ermöglichen, die Menge des gemahlenen Produkts, das durch den Auslass (4A) strömt, auf Grundlage des Ausgangssignals zu berechnen;
**dadurch gekennzeichnet, dass** das Rad (18) mit dem Befestigungsrahmen (3) gekoppelt ist, um sich unter Schub der Strömung des gemahlenen Produkts (16) frei um die Gelenkachse (21) zu drehen.

2. Mahlgerät (1) nach Anspruch 1, wobei der elektrische Antriebsmotor (7) zum Antreiben des beweglichen Mahlglieds (5) von der elektronischen Steuereinheit (8) auf der Grundlage des von dem elektronischen Sensorsystem (36) ausgegebenen Ausgangssignals gesteuert wird.

3. Mahlgerät (1) nach Anspruch 1 oder 2, wobei das elektronische Sensorsystem (36) ein mit einer Welle (20) des Rades (18) verkeiltes phonisches Rad (37) und einen dem phonischen Rad (37) zugeordneten und mit der elektronischen Steuereinheit (8) verbundenen Sensor (38) umfasst.

4. Mahlgerät (1) nach einem der vorhergehenden Ansprüche, wobei der Führungskanal (11) eine Bodenwand (14) aufweist und wobei das Rad (18) außen durch eine Umfangsfläche (29) begrenzt ist, die koaxial zur Gelenkachse (21) und von der Bodenwand (14) beabstandet ist.

5. Mahlgerät (1) nach Anspruch 4, wobei das Rad (18) eine Vielzahl von radialen Rippen (31) trägt, die sich radial ausgehend von der Gelenkachse (21) erstrecken.

6. Mahlgerät (1) nach Anspruch 5, wobei das Rad (18) zwei gegenüberliegende Vorderflächen (30) aufweist, die orthogonal zu der Gelenkachse (21) verlaufen, wobei jede der Vorderflächen (30) eine jeweilige Gruppe von radialen Rippen (31) trägt, die von den jeweiligen Vorderflächen (30) axial abstehen.

7. Mahlgerät (1) nach Anspruch 5 oder 6, wobei jede der radialen Rippen (31) eine parallel zur Gelenkachse (21) gemessene Größe aufweist, die zur Gelenkachse (21) hin zunimmt.

8. Mahlgerät (1) nach einem der Ansprüche 4 bis 7, wobei die Gelenkachse (21) in Bezug auf die Bodenwand (14) zwischen einer abgesenkten Endhubposition, in der das Rad (18) in einem minimalen Abstand (D) von der Bodenwand (14) angeordnet ist, und mindestens einer angehobenen Position, in der das Rad (18) in einem Abstand von der Bodenwand (14) angeordnet ist, der größer als der minimale Abstand (D) ist, bewegbar ist.

9. Mahlgerät (1) nach Anspruch 8, ferner umfassend Führungsmittel (26), um die Gelenkachse (21) kontinuierlich entlang eines Abstandswegs zu führen, der es dem Rad (18) ermöglicht, sich von der Bodenwand (14) wegführend zu bewegen.

10. Mahlgerät (1) nach Anspruch 9, wobei der Abstandsweg mindestens einen relativ zur Zuführrichtung (13) geneigten Abschnitt (27) aufweist.

## Revendications

1. Appareil de broyage (1) pour le broyage d'un produit en grains, en particulier pour un distributeur automatique de boissons (A) ;
l'appareil de broyage (1) comprend un broyeur (2) doté d'un cadre de fixation (3), d'une entrée (4) pour un produit en grains devant être broyé, d'un organe de broyage mobile (5) pour le broyage du produit en grains ; un moteur d'entraînement électrique (7) pour l'entraînement de l'organe de broyage mobile (5) ; une sortie (4A) pour un produit broyé ; et des moyens de dosage pour le dosage d'une quantité de produit broyé acheminé par l'appareil de broyage (1) ;
les moyens de dosage comprenant un dispositif de mesure (10) comprenant un canal de guidage (11) communiquant avec ladite sortie (4A) et configuré pour former et faire avancer un écoulement uniforme (16) de produit broyé dans une direction d'acheminement (13), et au moins une roue (18) partiellement logée dans ledit canal de guidage (11) et couplée audit cadre de fixation (3) pour tourner autour d'un axe d'articulation (21) transversal à ladite direction d'acheminement (13) ;
le dispositif de mesure (10) comprend en outre un système de détection électronique (36) pour une détection d'une position angulaire de la roue (18) autour dudit axe d'articulation (21), et pour la sortie d'un signal de sortie indicatif de celle-ci, pendant l'écoulement (16) du produit broyé de façon à permettre à une unité de commande électronique (8) de calculer la quantité de produit broyé s'écoulant à travers ladite sortie (4A) sur la base dudit signal de sortie ;
**caractérisé en ce que** la roue (18) est couplée audit cadre de fixation (3) pour tourner librement autour dudit axe d'articulation (21) sous la poussée dudit écoulement de produit broyé (16).

2. Appareil de broyage (1) selon la revendication 1, dans lequel le moteur d'entraînement électrique (7) pour l'entraînement de l'organe de broyage mobile (5) est commandé par l'unité de commande électronique (8) sur la base du signal de sortie délivré en sortie par le système de détection électronique (36).

3. Appareil de broyage (1) selon la revendication 1 ou 2, dans lequel le système de détection électronique (36) comprend une roue phonique (37) clavetée sur un arbre (20) de la roue (18), et un capteur (38) associé à la roue phonique (37) et connecté à l'unité de commande électronique (8).

4. Appareil de broyage (1) selon l'une quelconque des revendications précédentes, dans lequel ledit canal de guidage (11) possède une paroi de fond (14) et dans lequel ladite roue (18) est délimitée de manière externe par une surface périmétrique (29) coaxiale à l'axe d'articulation (21) et espacée de ladite paroi de fond (14).

5. Appareil de broyage (1) selon la revendication 4, dans lequel ladite roue (18) porte une pluralité de nervures radiales (31) s'étendant radialement à partir dudit axe d'articulation (21).

6. Appareil de broyage (1) selon la revendication 5, dans lequel ladite roue (18) possède deux surfaces avant (30) opposées, orthogonales audit axe d'articulation (21) ; chacune desdites surfaces avant (30) portant un groupe associé desdites nervures radiales (31) en porte-à-faux axial par rapport aux surfaces avant (30) respectives.

7. Appareil de broyage (1) selon la revendication 5 ou 6, dans lequel chacune desdites nervures radiales (31) possède une taille, mesurée parallèlement audit axe d'articulation (21), qui augmente vers ledit axe d'articulation (21).

8. Appareil de broyage (1) selon l'une quelconque des revendications 4 à 7, dans lequel ledit axe d'articulation (21) est mobile par rapport à ladite paroi de fond (14) entre une position abaissée de fin de course, dans laquelle la roue (18) est agencée à une distance minimale (D) de ladite paroi de fond (14), et au moins une position relevée dans laquelle la roue (18) est agencée à une distance de ladite paroi de fond (14) plus grande que ladite distance minimale (D).

9. Appareil de broyage (1) selon la revendication 8, comprenant en outre des moyens de guidage (26) pour guider en continu ledit axe d'articulation (21) le long d'un chemin de distanciation qui permet à ladite roue (18) de s'éloigner de ladite paroi de fond (14).

10. Appareil de broyage (1) selon la revendication 9, dans lequel ledit chemin de distanciation comprend au moins une section inclinée (27) par rapport à ladite direction d'acheminement (13).
